# EUROPEAN PATENT SPECIFICATION

(11) **EP 3 392 255 B1**
(45) Date of publication and mention of the grant of the patent: **03.06.2020**
(21) Application number: 18166048.1
(22) Date of filing: 06.04.2018
(51) Int. Cl.: C07F 7/10

(54) **UNSATURATED BOND-CONTAINING BISSILYL COMPOUND AND MAKING METHOD**
BISSILYLVERBINDUNG MIT UNGESÄTTIGTER BINDUNG UND HERSTELLUNGSVERFAHREN
COMPOSÉ BISSILYL CONTENANT UNE LIAISON INSATURÉE ET SON PROCÉDÉ DE FABRICATION

(30) Priority: 18.04.2017 JP 2017081700
(43) Date of publication of application: 24.10.2018
(73) Proprietor: Shin-Etsu Chemical Co., Ltd., Tokyo (JP)
(72) Inventor: TONOMURA, Yoichi, Joetsu-shi, Niigata (JP); KUBOTA, Tohru, Joetsu-shi, Niigata (JP)
(74) Representative: Ter Meer Steinmeister & Partner

(56) References cited:
- WO-A1-2015/055252

## Description

### TECHNICAL FIELD

This invention relates to an unsaturated bond-containing bissilyl compound, which is useful as a polymer modifier, and a method for preparing the same.

### BACKGROUND ART

Of various prior art attempts to improve polymer properties, one known attempt is by introducing functional groups into polymers. One of such functional group introduction methods is modification of polymers using compounds having a desired functional group and an unsaturated bond as a modifier. For example, Patent Document 1 discloses modification of polyolefin with vinyltrimethoxysilane. Other methods include modification of polyolefin with maleic anhydride (Patent Document 2); modification of polyolefin with a N-vinylalkylamide compound (Patent Document 3); and modification of a thermoplastic elastomer with an acrylamide compound (Patent Document 4).

These modification methods are successful in improving properties of polymers. For example, the maleic anhydride-modified polyolefin described in Patent Document 2 has a good balance of melt tension and fluidity. The N-vinylalkylamide-modified polyolefin described in Patent Document 3 has a good balance of rigidity and impact resistance. The acrylamide-modified thermoplastic elastomer described in Patent Document 4 has improved tensile properties.

Patent Document 5 discloses vinylsilane compounds which are useful as modifying monomers in the polymerization of conjugated diene monomers, optionally together with aromatic vinyl monomers.

### Citation List

Patent Document 1: JP-B S48-001711
Patent Document 2: JP-A 2004-099632
Patent Document 3: JP-A H07-228734
Patent Document 4: JP-A 2003-073503
Patent Document 5: WO 2015/055252 A1

### SUMMARY OF INVENTION

Since the above polymer modifiers have a short distance between a functional group and an unsaturated bond as reactive site, the modified polymers have the functional group located in the vicinity of the polymer chain, which may fail to fully attain the modification purpose of improving polymer properties. As the intended use of polymers is diversified, it would be desirable to have a polymer with further improved properties. There exists a need for a polymer modifier capable of modification to further improve polymer properties.

An object of the invention is to provide a novel polymer modifier which is effective for modifying polymers to improve their properties, and a method for preparing the same.

The inventors have found that specific unsaturated bond-containing bissilyl compounds having an adequate distance between the unsaturated bond as reactive site and the functional group are useful as a polymer modifier capable of effectively modifying polymers to improve their properties.

In one aspect, the invention provides an unsaturated bond-containing bissilyl compound having the general formula (1).

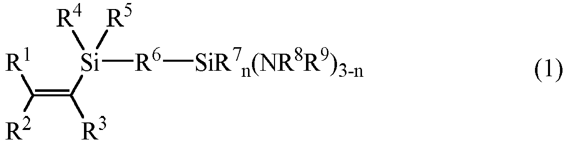

Herein R¹ to R³ are each independently hydrogen or a substituted or unsubstituted, C₁-C₂₀ monovalent hydrocarbon group, R⁴, R⁵ and R⁷ are each independently a substituted or unsubstituted, C₁-C₂₀ monovalent hydrocarbon group, R⁶ is a C₁-C₂₀ divalent hydrocarbon group which may contain oxygen, silicon or sulfur, R⁸ and R⁹ are each independently a substituted or unsubstituted, C₁-C₂₀ monovalent hydrocarbon group which may contain a heteroatom, R⁸ and R⁹ may bond together to form a C₂-C₂₀ ring with the nitrogen atom to which they are attached, and n is an integer of 0, 1 or 2.

In another aspect, the invention provides a method for preparing the unsaturated bond-containing bissilyl compound, comprising the step of reacting an unsaturated bond-containing halosilane compound having the general formula (2): 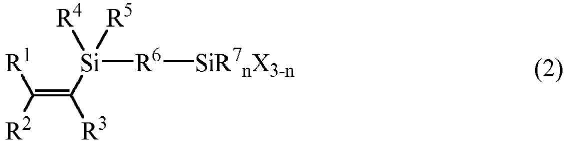 wherein R¹ to R⁷ and n are as defined above and X is a halogen atom, with an amine compound having the general formula (3):

R⁸R⁹NH (3)

wherein R⁸ and R⁹ are as defined above.

### ADVANTAGEOUS EFFECTS OF INVENTION

The unsaturated bond-containing bissilyl compounds having an adequate distance between the unsaturated bond as reactive site and the functional group are useful as a polymer modifier or the like since polymers can be modified with the compounds to attain significant improvements in polymer properties.

### BRIEF DESCRIPTION OF DRAWINGS

FIGS. 1 and 2 are diagrams showing ¹H-NMR and IR spectra of 1-(dimethylvinylsilyl)-2-[bis(diethylamino)methylsilyl] ethane in Example 1, respectively.
FIGS. 3 and 4 are diagrams showing ¹H-NMR and IR spectra of 1-vinyl-1,1,3,3,6-pentamethyl-6,6-bis(diethylamino)-2-oxa-1,3,6-trisilahexane in Example 2, respectively.

### DESCRIPTION OF PREFERRED EMBODIMENTS

As used herein, the notation (Cn-Cm) means a group containing from n to m carbon atoms per group.

One embodiment of the invention is an unsaturated bond-containing bissilyl compound having the general formula (1). 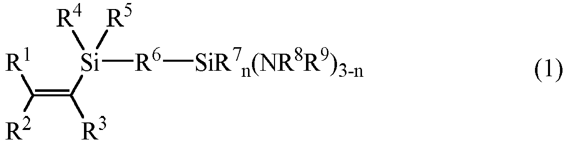 Herein n is an integer of 0, 1 or 2.

In formula (1), R¹ to R³ are each independently hydrogen or a substituted or unsubstituted monovalent hydrocarbon group of 1 to 20 carbon atoms, preferably 1 to 10 carbon atoms, and more preferably 1 to 5 carbon atoms. R⁴, R⁵ and R⁷ are each independently a substituted or unsubstituted monovalent hydrocarbon group of 1 to 20 carbon atoms, preferably 1 to 10 carbon atoms, and more preferably 1 to 5 carbon atoms.

The monovalent hydrocarbon group may be straight, branched or cyclic. Examples include straight alkyl groups such as methyl, ethyl, propyl, butyl, pentyl, hexyl, heptyl, octyl, decyl, dodecyl, tetradecyl, hexadecyl, octadecyl, and icosyl; branched alkyl groups such as isopropyl, isobutyl, sec-butyl, tert-butyl, thexyl, and 2-ethylhexyl; cyclic alkyl groups such as cyclopentyl and cyclohexyl; alkenyl groups such as vinyl, allyl, butenyl, and pentenyl; aryl groups such as phenyl and tolyl; and aralkyl groups such as benzyl. Of these, from the aspects of availability of reactants and utility of the product, R¹ to R³ are preferably hydrogen and R⁴, R⁵ and R⁷ are preferably C₁-C₃ alkyl groups such as methyl, ethyl, and propyl and C₁-C₅ alkenyl groups such as allyl, butenyl, and pentenyl.

Some or all hydrogen atoms in the hydrocarbon group may be substituted by substituents, examples of which include C₁-C₅ alkoxy groups such as methoxy, ethoxy, and (iso)propoxy; halogen atoms such as fluorine, chlorine, bromine, and iodine; cyano; amino; C₂-C₁₀ acyl groups such as acetyl, propionyl, and benzoyl; trichlorosilyl; trialkylsilyl, dialkylmonochlorosilyl, monoalkyldichlorosilyl, trialkoxysilyl, dialkylmonoalkoxysilyl, and monoalkyldialkoxysilyl groups, in which the alkyl and alkoxy moieties each have 1 to 5 carbon atoms.

R⁶ is a divalent hydrocarbon group of 1 to 20 carbon atoms, preferably 1 to 10 carbon atoms, and more preferably 1 to 5 carbon atoms, which may contain oxygen, silicon or sulfur. Examples include alkylene groups such as methylene, ethylene, propylene (methylethylene), trimethylene, methyltrimethylene, tetramethylene, hexamethylene, octamethylene, decatrimethylene, and isobutylene; arylene groups such as phenylene and methylphenylene; aralkylene groups such as ethylenephenylene and ethylenephenylenemethylene; and heteroatom-containing alkylene groups such as 3-oxabutylene, 3-azabutylene, 3-oxahexylene, and 3-azahexylene.

The divalent hydrocarbon group may contain two or more heteroatoms while the heteroatom(s) may be present at the end of the alkylene chain. Exemplary of such divalent group is -O-Si(CH₃)₂-CH₂-CH₂-.

R⁸ and R⁹ are each independently a substituted or unsubstituted monovalent hydrocarbon group of 1 to 20 carbon atoms, preferably 1 to 10 carbon atoms, and more preferably 1 to 5 carbon atoms, which may contain a heteroatom, R⁸ and R⁹, taken together, may form a C₂-C₂₀ ring with the nitrogen atom to which they are attached. Examples of the heteroatom include nitrogen, oxygen, and sulfur. The substituted or unsubstituted, C₁-C₂₀ monovalent hydrocarbon group represented by R⁸ and R⁹ is as exemplified above for R¹ to R⁵, and R⁷. Examples of the C₂-C₂₀ ring structure which R⁸ and R⁹ form with the nitrogen atom include aziridine, azetidine, pyrrolidine, piperidine, piperazine, 4-methylpiperazine, morpholine, and azepane rings. Of these, pyrrolidine, piperidine, 4-methylpiperazine and morpholine rings are preferred from the aspects of availability of reactants and utility of the product.

Examples of the unsaturated bond-containing bissilyl compound having formula (1) include 1 -(dimethylvinylsilyl)-1 - [tris(dimethylamino)silyl]methane, 1-(dimethylvinylsilyl)-1-[bis(dimethylamino)methylsilyl]methane, 1-(dimethylvinylsilyl)-1-[(dimethylamino)dimethylsilyl]methane, 1-(dimethylvinylsilyl)-2-[tris(dimethylamino)silyl]ethane, 1-(dimethylvinylsilyl)-2-[bis(dimethylamino)methylsilyl]ethane, 1-(dimethylvinylsilyl)-2-[(dimethylamino)dimethylsilyl]ethane, 1-(dimethylvinylsilyl)-3-[tris(dimethylamino)silyl]propane, 1-(dimethylvinylsilyl)-3-[bis(dimethylamino)methylsilyl]propane, 1-(dimethylvinylsilyl)-3-[(dimethylamino)dimethylsilyl]propane, 1-(dimethylvinylsilyl)-8-[tris(dimethylamino)silyl]octane, 1-(dimethylvinylsilyl)-8-[bis(dimethylamino)methylsilyl]octane, 1-(dimethylvinylsilyl)-8-[(dimethylamino)dimethylsilyl]octane, 1-vinyl-1,1,3,3-tetramethyl-6,6,6-tris(dimethylamino)-2-oxa-1,3,6-trisilahexane, 1-vinyl-1,1,3,3,6-pentamethyl-6,6-bis(dimethylamino)-2-oxa-1,3,6-trisilahexane, 1-vinyl-1,1,3,3,6,6-hexamethyl-6-dimethylamino-2-oxa-1,3,6-trisilahexane, 1-(dimethylvinylsilyl)-1-[tris(diethylamino)silyl]methane, 1-(dimethylvinylsilyl)-1-[bis(diethylamino)methylsilyl]methane, 1-(dimethylvinylsilyl)-1-[(diethylamino)dimethylsilyl]methane, 1-(dimethylvinylsilyl)-2-[tris(diethylamino)silyl]ethane, 1-(dimethylvinylsilyl)-2-[bis(diethylamino)methylsilyl]ethane, 1-(dimethylvinylsilyl)-2-[(diethylamino)dimethylsilyl]ethane, 1-(dimethylvinylsilyl)-3-[tris(diethylamino)silyl]propane, 1-(dimethylvinylsilyl)-3-[bis(diethylamino)methylsilyl]propane, 1-(dimethylvinylsilyl)-3-[(diethylamino)dimethylsilyl]propane, 1-(dimethylvinylsilyl)-8-[tris(diethylamino)silyl]octane, 1-(dimethylvinylsilyl)-8-[bis(diethylamino)methylsilyl]octane, 1-(dimethylvinylsilyl)-8-[(diethylamino)dimethylsilyl]octane, 1-vinyl-1,1,3,3-tetramethyl-6,6,6-tris(diethylamino)-2-oxa-1,3,6-trisilahexane, 1-vinyl-1,1,3,3,6-pentamethyl-6,6-bis(diethylamino)-2-oxa-1,3,6-trisilahexane, 1-vinyl-1,1,3,3,6,6-hexamethyl-6-diethylamino-2-oxa-1,3,6-trisilahexane, 1-(dimethylvinylsilyl)-1-[tris(dibutylamino)silyl]methane, 1-(dimethylvinylsilyl)-1-[bis(dibutylamino)methylsilyl]methane, 1-(dimethylvinylsilyl)-1-[(dibutylamino)dimethylsilyl]methane, 1-(dimethylvinylsilyl)-2-[tris(dibutylamino)silyl]ethane, 1-(dimethylvinylsilyl)-2-[bis(dibutylamino)methylsilyl]ethane, 1-(dimethylvinylsilyl)-2-[(dibutylamino)dimethylsilyl]ethane, 1-(dimethylvinylsilyl)-3-[tris(dibutylamino)silyl]propane, 1-(dimethylvinylsilyl)-3-[bis(dibutylamino)methylsilyl]propane, 1-(dimethylvinylsilyl)-3-[(dibutylamino)dimethylsilyl]propane, 1-(dimethylvinylsilyl)-8-[tris(dibutylamino)silyl]octane, 1-(dimethylvinylsilyl)-8-[bis(dibutylamino)methylsilyl]octane, 1-(dimethylvinylsilyl)-8-[(dibutylamino)dimethylsilyl]octane, 1-vinyl-1,1,3,3-tetramethyl-6,6,6-tris(dibutylamino)-2-oxa-1,3,6-trisilahexane, 1-vinyl-1,1,3,3,6-pentamethyl-6,6-bis(dibutylamino)-2-oxa-1,3,6-trisilahexane, 1-vinyl-1,1,3,3,6,6-hexamethyl-6-dibutylamino-2-oxa-1,3,6-trisilahexane, 1-(dimethylvinylsilyl)-1-[tris(morpholino)silyl]methane, 1-(dimethylvinylsilyl)-1-[bis(morpholino)methylsilyl]methane, 1-(dimethylvinylsilyl)-1-[(morpholino)dimethylsilyl]methane, 1-(dimethylvinylsilyl)-2-[tris(morpholino)silyl]ethane, 1-(dimethylvinylsilyl)-2-[bis(morpholino)methylsilyl]ethane, 1-(dimethylvinylsilyl)-2-[(morpholino)dimethylsilyl]ethane, 1-(dimethylvinylsilyl)-3-[tris(morpholino)silyl]propane, 1-(dimethylvinylsilyl)-3-[bis(morpholino)methylsilyl]propane, 1-(dimethylvinylsilyl)-3-[(morpholino)dimethylsilyl]propane, 1-(dimethylvinylsilyl)-8-[tris(morpholino)silyl]octane, 1-(dimethylvinylsilyl)-8-[bis(morpholino)methylsilyl]octane, 1-(dimethylvinylsilyl)-8-[(morpholino)dimethylsilyl]octane, 1-vinyl-1,1,3,3-tetramethyl-6,6,6-tris(morpholino)-2-oxa-1,3,6-trisilahexane, 1-vinyl-1,1,3,3,6-pentamethyl-6,6-bis(morpholino)-2-oxa-1,3,6-trisilahexane, 1-vinyl-1,1,3,3,6,6-hexamethyl-6-morpholino-2-oxa-1,3,6-trisilahexane, 1-(dimethylvinylsilyl)-1-[tris(4-methylpiperazin-1-yl)silyl]methane, 1-(dimethylvinylsilyl)-1-[bis(4-methylpiperazin-1-yl)methylsilyl]methane, 1-(dimethylvinylsilyl)-1-[(4-methylpiperazin-1-yl)dimethylsilyl]methane, 1-(dimethylvinylsilyl)-2-[tris(4-methylpiperazin-1-yl)silyl]ethane, 1-(dimethylvinylsilyl)-2-[bis(4-methylpiperazin-1-yl)methylsilyl]ethane, 1-(dimethylvinylsilyl)-2-[(4-methylpiperazin-1-yl)dimethylsilyl]ethane, 1-(dimethylvinylsilyl)-3-[tris(4-methylpiperazin-1-yl)silyl]propane, 1-(dimethylvinylsilyl)-3-[bis(4-methylpiperazin-1-yl)methylsilyl]propane, 1-(dimethylvinylsilyl)-3-[(4-methylpiperazin-1-yl)dimethylsilyl]propane, 1-(dimethylvinylsilyl)-8-[tris(4-methylpiperazin-1-yl)silyl]octane, 1-(dimethylvinylsilyl)-8-[bis(4-methylpiperazin-1-yl)methylsilyl]octane, 1-(dimethylvinylsilyl)-8-[(4-methylpiperazin-1-yl)dimethylsilyl]octane, 1-vinyl-1,1,3,3-tetramethyl-6,6,6-tris(4-methylpiperazin-1-yl)-2-oxa-1,3,6-trisilahexane, 1-vinyl-1,1,3,3,6-pentamethyl-6,6-bis(4-methylpiperazin-1-yl)-2-oxa-1,3,6-trisilahexane, and 1-vinyl-1,1,3,3,6,6-hexamethyl-6-(4-methylpiperazin-1-yl)-2-oxa-1,3,6-trisilahexane.

The unsaturated bond-containing bissilyl compound having formula (1) may be prepared, for example, by reacting an unsaturated bond-containing halosilane compound having the general formula (2) with an amine compound having the general formula (3). 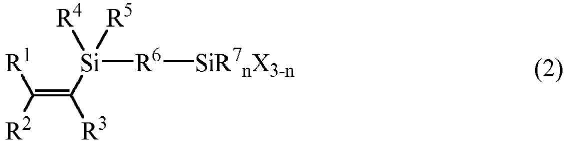 Herein R¹ to R⁷ and n are as defined above and X is a halogen atom such as fluorine, chlorine, bromine or iodine.

R⁸R⁹NH (3)

Herein R⁸ and R⁹ are as defined above.

Examples of the unsaturated bond-containing halosilane compound having formula (2) include 1-(dimethylvinylsilyl)-1-(trichlorosilyl)methane, 1-(dimethylvinylsilyl)-1-(dichloromethylsilyl)methane, 1-(dimethylvinylsilyl)-1-(chlorodimethylsilyl)methane, 1-(dimethylvinylsilyl)-2-(trichlorosilyl)ethane, 1-(dimethylvinylsilyl)-2-(dichloromethylsilyl)ethane, 1-(dimethylvinylsilyl)-2-(chlorodimethylsilyl)ethane, 1-(dimethylvinylsilyl)-3-(trichlorosilyl)propane, 1-(dimethylvinylsilyl)-3-(dichloromethylsilyl)propane, 1-(dimethylvinylsilyl)-3-(chlorodimethylsilyl)propane, 1-(dimethylvinylsilyl)-8-(trichlorosilyl)octane, 1-(dimethylvinylsilyl)-8-(dichloromethylsilyl)octane, 1-(dimethylvinylsilyl)-8-(chlorodimethylsilyl)octane, 1-vinyl-1,1,3,3-tetramethyl-6,6,6-trichloro-2-oxa-1,3,6-trisilahexane, 1-vinyl-1,1,3,3,6-pentamethyl-6,6-dichloro-2-oxa-1,3,6-trisilahexane, 1-vinyl-1,1,3,3,6,6-hexamethyl-6-chloro-2-oxa-1,3,6-trisilahexane, 1-(dimethylvinylsilyl)-1-(tribromosilyl)methane, 1-(dimethylvinylsilyl)-1-(dibromomethylsilyl)methane, 1-(dimethylvinylsilyl)-1-(bromodimethylsilyl)methane, 1-(dimethylvinylsilyl)-2-(tribromosilyl)ethane, 1-(dimethylvinylsilyl)-2-(dibromomethylsilyl)ethane, 1-(dimethylvinylsilyl)-2-(bromodimethylsilyl)ethane, 1-(dimethylvinylsilyl)-3-(tribromosilyl)propane, 1-(dimethylvinylsilyl)-3-(dibromomethylsilyl)propane, 1-(dimethylvinylsilyl)-3-(bromodimethylsilyl)propane, 1-(dimethylvinylsilyl)-8-(tribromosilyl)octane, 1-(dimethylvmylsilyl)-8-(dibromomethylsilyl)octane, 1-(dimethylvinylsilyl)-8-(bromodimethylsilyl)octane, 1-vinyl-1,1,3,3-tetramethyl-6,6,6-tribromo-2-oxa-1,3,6-trisilahexane, 1-vinyl-1,1,3,3,6-pentamethyl-6,6-dibromo-2-oxa-1,3,6-trisilahexane, 1-vinyl-1,1,3,3,6,6-hexamethyl-6-bromo-2-oxa-1,3,6-trisilahexane, 1-(dimethylvinylsilyl)-1-(triiodosilyl)methane, 1-(dimethylvinylsilyl)-1-(diiodomethylsilyl)methane, 1-(dimethylvinylsilyl)-1-(iododimethylsilyl)methane, 1-(dimethylvinylsilyl)-2-(triiodosilyl)ethane, 1-(dimethylvmylsilyl)-2-(diiodomethylsilyl)ethane, 1-(dimethylvinylsilyl)-2-(iododimethylsilyl)ethane, 1-(dimethylvinylsilyl)-3-(triiodosilyl)propane, 1-(dimethylvinylsilyl)-3-(diiodomethylsilyl)propane, 1-(dimethylvinylsilyl)-3-(iododimethylsilyl)propane, 1-(dimethylvinylsilyl)-8-(triiodosilyl)octane, 1-(dimethylvinylsilyl)-8-(diiodomethylsilyl)octane, 1-(dimethylvinylsilyl)-8-(iododimethylsilyl)octane, 1-vinyl-1,1,3,3-tetramethyl-6,6,6-triiodo-2-oxa-1,3,6-trisilahexane, 1-vinyl-1,1,3,3,6-pentamethyl-6,6-diiodo-2-oxa-1,3,6-trisilahexane, and 1-vinyl-1,1,3,3,6,6-hexamethyl-6-iodo-2-oxa-1,3,6-trisilahexane.

Examples of the amine compound having formula (3) include dialkylamines such as dimethylamine, diethylamine, dipropylamine, dibutylamine, dihexylamine, dioctylamine, and di(2-ethylhexyl)amine; dicycloalkylamines such as dicyclopentylamine and dicyclohexylamine; diaryl amines such as diphenylamine; diaralkylamine such as dibenzylamine; and cycloaliphatic amines such as pyrrolidine, piperidine, morpholine, and 1-methylpiperazine.

The unsaturated bond-containing halosilane compound having formula (2) and the amine compound having formula (3) may be combined at any desired ratio. It is preferred from the aspects of reactivity and productivity to use 0.5 to 5.0 moles, more preferably 0.8 to 3.0 moles of the compound of formula (3) per mole of halogen in the compound of formula (2).

In the reaction, a hydrogen halide forms as by-product. The hydrogen halide may be trapped using the amine compound of formula (3) itself or another nitrogen-containing compound as a base.

Suitable other nitrogen-containing compounds include trimethylamine, triethylamine, tripropylamine, tributylamine, ethyldiisopropylamine, pyridine, dimethylaminopyridine, dimethylaniline, methylimidazole, tetramethylethylenediamine, and 1,8-diazabicyclo[5.4.0]undecene-7. Although the amount of the other nitrogen-containing compound used is not particularly limited, it is preferred from the aspects of reactivity and productivity to use the other nitrogen-containing compound in an amount of 0.3 to 10.0 moles, more preferably 0.5 to 5.0 moles per mole of the halosilane compound of formula (2).

Although the reaction takes place even in a catalyst-free system, a catalyst may be added for the purpose of promoting the kinetics of reaction. Examples of the catalyst include sulfuric acid, sulfonic acid derivatives such as methanesulfonic acid, benzenesulfonic acid, toluenesulfonic acid, dodecylbenzenesulfonic acid, and trifluoromethanesulfonic acid, hydrochloric acid, nitric acid, and salts of these acids. Although the amount of the catalyst used is not particularly limited, it is preferred from the aspects of reactivity and productivity to use the catalyst in an amount of 0.0001 to 0.1 mole, more preferably 0.001 to 0.05 mole per mole of the halosilane compound of formula (2).

The reaction temperature is preferably in a range of 0°C to 200°C, more preferably 20°C to 150°C, though not limited thereto. The reaction time is preferably 1 to 60 hours, more preferably 1 to 30 hours, though not limited thereto. The reaction atmosphere is preferably an inert gas atmosphere such as nitrogen or argon.

A solvent may be used although the reaction may take place in a solventless system. Examples of the solvent used herein include hydrocarbon solvents such as pentane, hexane, cyclohexane, heptane, isooctane, benzene, toluene, and xylene; ether solvents such as diethyl ether, tetrahydrofuran, and dioxane; ester solvents such as ethyl acetate and butyl acetate; aprotic polar solvents such as acetonitrile, N,N-dimethylformamide, and N-methylpyrrolidone; and chlorinated hydrocarbon solvents such as dichloromethane and chloroform. These solvents may be used alone or in admixture of two or more.

At the end of reaction, there forms a hydrogen halide salt of nitrogen-containing compound, which may be removed by any suitable techniques such as filtration of the reaction solution, and addition of water, sodium hydroxide or potassium hydroxide aqueous solution, ethylenediamine or 1,8-diazabicyclo[5.4.0]undecene-7 to dissolve the hydrogen halide salt and subsequent separation.

After the salt is removed from the reaction solution as mentioned above, the target product may be collected from the reaction solution using conventional techniques such as distillation and distilling off low-boiling compounds.

### EXAMPLE

Examples of the invention are given below by way of illustration and not by way of limitation.

### Example 1

A flask equipped with a stirrer, reflux condenser, dropping funnel and thermometer was charged with 45.5 g (0.2 mol) of 1-(dimethylvinylsilyl)-2-(dichloromethylsilyl)ethane, 0.4 g (0.004 mol) of methanesulfonic acid, and 120 ml of toluene, and heated at 50°C. Once the internal temperature became steady, 61.4 g (0.84 mol) of diethylamine was added dropwise over 1 hour. The contents were stirred at the temperature for 10 hours. The reaction solution was cooled to room temperature, after which 90 g of 20 wt% sodium hydroxide aqueous solution was added. The lower layer was removed. The upper layer (i.e., organic layer) was distilled, collecting a fraction at a boiling point of 123°C/0.4 kPa. Amount 35.3 g.

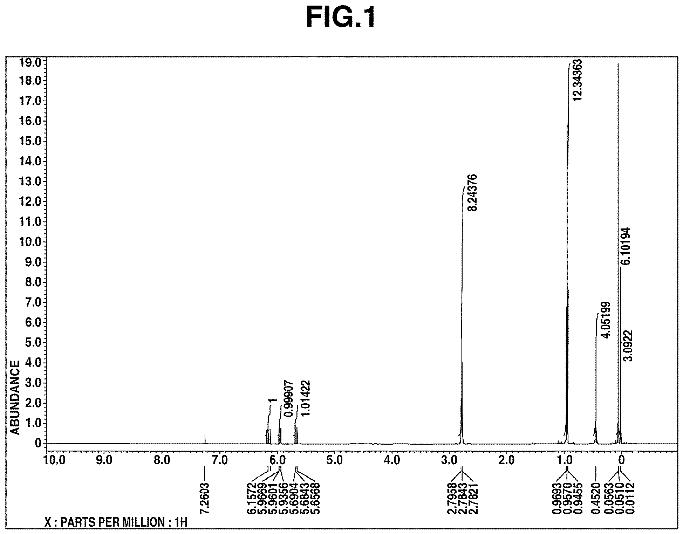

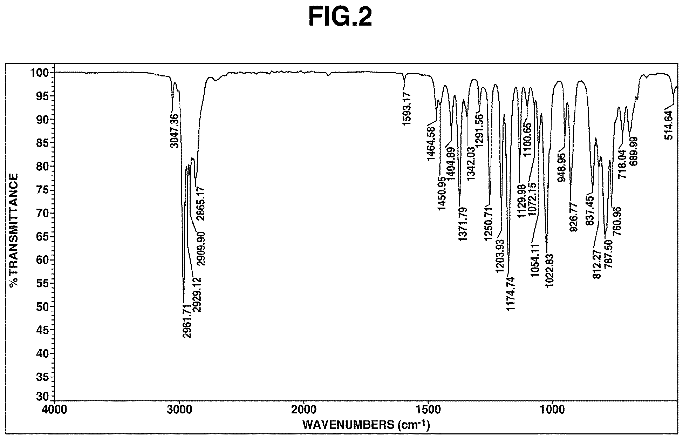

This fraction was analyzed by mass, ¹H-NMR, and IR spectroscopy.
Mass spectrum: m/z 300, 285, 228, 212, 187, 116
¹H-NMR spectrum: FIG. 1
IR spectrum: FIG. 2

From these data, the fraction was identified to be 1-(dimethylvinylsilyl)-2-[bis(diethylamino)methylsilyl]ethane.

### Example 2

A flask equipped with a stirrer, reflux condenser, dropping funnel and thermometer was charged with 75.4 g (0.25 mol) of 1-vinyl-1,1,3,3,6-pentamethyl-6,6-dichloro-2-oxa-1,3,6-trisilahexane, 0.5 g (0.005 mol) of methanesulfonic acid, and 150 ml of toluene, and heated at 50°C. Once the internal temperature became steady, 76.8 g (1.05 mol) of diethylamine was added dropwise over 1 hour. The contents were stirred at the temperature for 8 hours. The reaction solution was cooled to room temperature, after which the resulting salt was removed by filtration. The filtrate was distilled, collecting a fraction at a boiling point of 142-143°C/0.4 kPa. Amount 82.5 g.

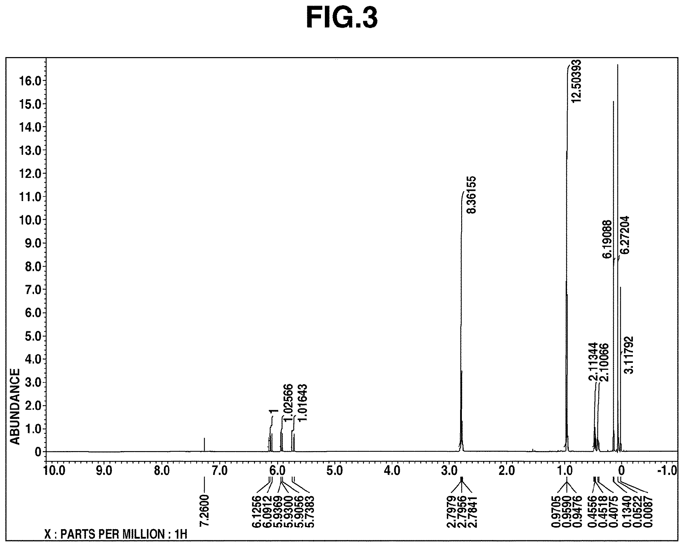

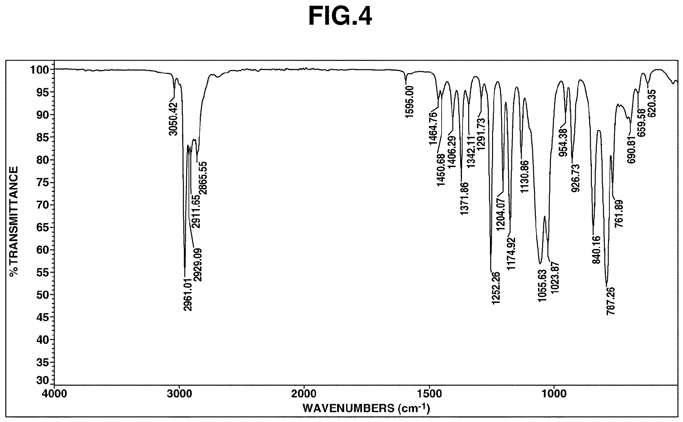

This fraction was analyzed by mass, ¹H-NMR, and IR spectroscopy.
Mass spectrum: m/z 374, 302, 286, 231, 187, 116
¹H-NMR spectrum: FIG. 3
IR spectrum: FIG. 4

From these data, the fraction was identified to be 1-vinyl-1,1,3,3,6-pentamethyl-6,6-bis(diethylamino)-2-oxa-1,3,6-trisilahexane.

## Claims

1. An unsaturated bond-containing bissilyl compound having the general formula (1): 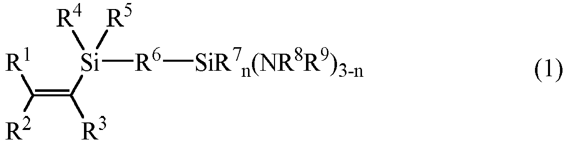 wherein R¹ to R³ are each independently hydrogen or a substituted or unsubstituted, C₁-C₂₀ monovalent hydrocarbon group, R⁴, R⁵ and R⁷ are each independently a substituted or unsubstituted, C₁-C₂₀ monovalent hydrocarbon group, R⁶ is a C₁-C₂₀ divalent hydrocarbon group which may contain oxygen, silicon or sulfur, R⁸ and R⁹ are each independently a substituted or unsubstituted, C₁-C₂₀ monovalent hydrocarbon group which may contain a heteroatom, R⁸ and R⁹ may bond together to form a C₂-C₂₀ ring with the nitrogen atom to which they are attached, and n is an integer of 0, 1 or 2.

2. A method for preparing the unsaturated bond-containing bissilyl compound of claim 1, comprising the step of reacting an unsaturated bond-containing halosilane compound having the general formula (2): 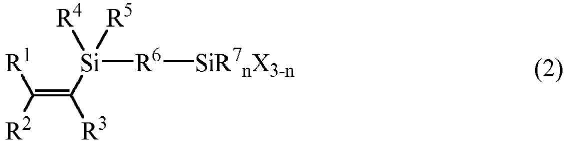 wherein R¹ to R⁷ and n are as defined above and X is a halogen atom, with an amine compound having the general formula (3):
R⁸R⁹NH (3)
wherein R⁸ and R⁹ are as defined above.

## Patentansprüche

1. Eine ungesättigte Bindung enthaltende Bissilylverbindung mit der allgemeinen Formel (1): 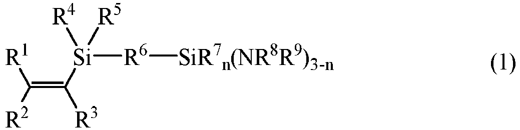 worin R¹ bis R³ jeweils unabhängig Wasserstoff oder eine substituierte oder unsubstituierte, einwertige C₁-C₂₀-Kohlenwasserstoffgruppe sind, R⁴, R⁵ und R⁷ jeweils unabhängig eine substituierte oder unsubstituierte, einwertige C₁-C₂₀-Kohlenwasserstoffgruppe sind, R⁶ eine zweiwertige C₁-C₂₀-Kohlenwasserstoffgruppe ist, die Sauerstoff, Silizium oder Schwefel enthalten kann, R⁸ und R⁹ jeweils unabhängig eine substituierte oder unsubstituierte, einwertige C₁-C₂₀-Kohlenwasserstoffgruppe sind, die ein Heteroatom enthalten kann, R⁸ und R⁹ miteinander verbunden sein können, um mit dem Stickstoffatom, an das sie angelagert sind, einen C₂-C₂₀-Ring zu bilden, und n eine ganze Zahl von 0, 1 oder 2 ist.

2. Verfahren zur Herstellung der eine ungesättigte Bindung enthaltenden Bissilylverbindung nach Anspruch 1, umfassend den Schritt des Umsetzens einer eine ungesättigte Bindung enthaltenden Halogensilanverbindung mit der allgemeinen Formel (2): 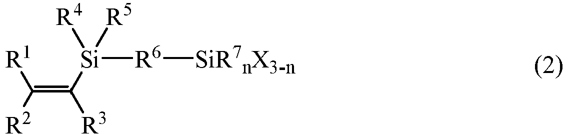 worin R¹ bis R⁷ und n wie oben definiert sind, und X ein Halogenatom ist, mit einer Aminverbindung der allgemeinen Formel (3):
R⁸R⁹NH (3)
worin R⁸ und R⁹ wie oben definiert sind.

## Revendications

1. Composé de bissilyle contenant une liaison insaturée ayant la formule générale (1) : 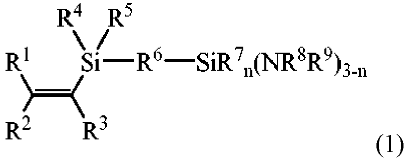 dans laquelle R¹ à R³ sont chacun indépendamment de l'hydrogène ou un groupe monovalent hydrocarboné substitué ou non substitué en C_{1 à} C₂₀, R⁴, R⁵ et R⁷ sont chacun indépendamment un groupe monovalent hydrocarboné substitué ou non substitué en C_{1 à} C₂₀, R⁶ est un groupe divalent hydrocarboné en C_{1 à} C₂₀ pouvant contenir de l'oxygène, du silicium ou du soufre, R⁸ et R⁹ sont chacun indépendamment un groupe monovalent hydrocarboné substitué ou non substitué en C_{1 à} C₂₀ pouvant contenir un hétéroatome, R⁸ et R⁹ peuvent se lier ensemble pour former un cycle en C_{2 à} C₂₀ avec l'atome d'azote auquel ils sont attachés, et n est un entier de 0,1 ou 2.

2. Procédé de préparation du composé de bissilyle contenant une liaison insaturée selon la revendication 1, comprenant l'étape de réaction d'un composé d'halosilane contenant une liaison insaturée ayant la formule générale (2) : 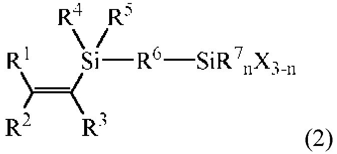 dans laquelle R¹ à R⁷ et n sont tels que définis ci-dessus et X est un atome d'halogène, avec un composé d'amine ayant la formule générale (3) :
R⁸R⁹NH (3)
dans laquelle R⁸ et R⁹ sont tels que définis ci-dessus.
